# EUROPEAN PATENT APPLICATION

(11) **EP 2 891 983 A1**
(43) Date of publication of application: **08.07.2015**
(21) Application number: 13833807.4
(22) Date of filing: 24.07.2013
(51) Int. Cl.: G06F 11/36

(54) **SOFTWARE VERIFICATION PROGRAM AND SOFTWARE VERIFICATION SYSTEM**

(30) Priority: 31.08.2012 JP 2012190826
(71) Applicant: Hitachi Automotive Systems, Ltd., Hitachinaka-shi, Ibaraki 312-8503 (JP)
(72) Inventor: MATSUBARA Masahiro, Tokyo 100-8280 (JP); SAKURAI Kohei, Tokyo 100-8280 (JP); NARISAWA Fumio, Tokyo 100-8280 (JP); YAMANAKA Hisamitsu, Hitachinaka-shi Ibaraki 312-8503 (JP); NEMOTO Mamoru, Hitachinaka-shi Ibaraki 312-8503 (JP)
(74) Representative: MERH-IP Matias Erny Reichl Hoffmann
(86) International application number: PCT/JP2013/069967
(87) International publication number: WO 2014/034330

(57) **Abstract**

In order to reduce time and effort required to allow inputs and outputs of a software model and an external environment model to match each other when the external environment model such as hardware and the software model are produced and combined as a verification model of a system, a variable attribute interpreting unit 25 infers the attribute of each variable written in a source code as much as possible on the basis of dependency relationship information derived by a dependency relationship analysis unit 22 and variable attribute information held by one or both of a variable attribute input unit 23 and a variable attribute database 24. For the inference, rules recorded in an inference rule database 26 are used. A variable attribute display unit 27 displays the variable attribute information inferred by the variable attribute interpreting unit 25 on a display device 13 together with the variable attribute information held by the variable attribute input unit 23 and the variable attribute database 24.

## Description

### Technical Field

The present invention relates to a software tool that analyzes the structure of software, and particularly to a software tool that analyzes the attribute of a variable using a data flow and establishes a verification model.

### Background Art

Recently, the scale of software has been enormously increased, and the structure and process thereof have been more complicated. In addition, it has been difficult for designers and verifiers to entirely recognize software. Further, it has been difficult to prepare and verify test cases that cover all possible states of software. Especially, due to the increased scale of software for control caused by motorized devices, a control device that controls in-vehicle devices has potential defects in electronic control devices including software, and there has been an increased possibility of deterioration in safety of systems. Against the above-described background, various function safety standards have been established. In these control systems, the defect of hardware triggers the defect of software in some cases, and the verification of software alone is insufficient. It is therefore necessary to verify the both of hardware and software. However, it is difficult to detect the defect that occurs only at specified timing in a test. As a cause of the defect related to the timing, there is a parallel operation by plural pieces of hardware or an interrupt process.

In order to secure the safety of the system, it is preferable for designers and verifiers to understand the structures and processes of software, especially, past software assets or source codes written by the other designers. Further, it is required to improve the completeness of a test for possible states of software and to remove the cause of the defect.

In order for designers and verifiers to easily understand, there are a method and a software tool in which a static analysis and a dynamic analysis are conducted for a program to visualize the results as a drawing such as a function call graph. Among the targets to be visualized, there is a dependency relationship between commands and variables as one piece of important information in the structure of software. In this case, the dependency relationship is a relationship in which results of execution are possibly changed depending on the order of execution.

On the other hand, model checking is one of techniques of exhaustively verifying the states of the system. In the model checking technique, the system is replaced by a state transition model, and the nature required for the system is defined as a property or an assertion to be input into a tool together with the state transition model, so that the tool checks the possible states of the system to determine whether or not the granted property or assertion is satisfied. If not satisfied, a counterexample is output.

As disclosed in, for example, Patent Literature 1, in order to detect defects generated by composite operations or mutual interaction of hardware and software in the model checking, an external environment model (verification model that expresses an external environment for software) such as hardware and a software model (verification model that expresses software) are produced and combined as a verification model for a system. There is a method of converting source codes to generate the software model. However, if the all source codes are converted into the verification model, there is a risk of generating a problem of uncompleted state search due to insufficient memory (referred to as state explosion). Thus, a process called slicing by which some codes are extracted is performed in some cases.

### Citation List

### Patent Literature

Patent Literature 1: Japanese Unexamined Patent Application Publication No. 2009-123159

### Summary of Invention

### Technical Problem

In the case where some source codes are extracted to be converted into the software model as described in Patent Literature 1, hardware related to an input or an output of the software model and software that is related to verification items but is not extracted are needed to be external environment models. Verifiers can produce the external environment models in more detail or at a high level of abstraction in accordance with the purpose of the verification. However, time and effort are generally required to prepare the software model, the external environment model, and the system verification model.

Further, on the basis of the state transition information of a part of software that is a checking target in the technique described in Patent Literature 1, the external environment model simulates the behavior of the other part that is not a checking target, and establishes message communications between the checking target part and the other part. Therefore, if there is no state transition information of software to be checked, the external environment model cannot be generated. Further, it is impossible to obtain the unexpected behavior of software such as failure in the external environment model.

In order to apply such an unrestricted external environment model to the checking, the external environment model needs to be prepared in accordance with software to be checked, or the checking target needs to be extracted from software in accordance with the prepared external environment model. In this case, inputs and outputs of the software model need to match those of the external environment. Therefore, when some source codes are extracted, it is necessary to adjust the range of extraction by setting a boundary variable with the external environment so as to match the inputs and outputs of the external environment model. On the contrary, it is necessary to prepare the external environment model in accordance with the inputs and outputs of the software model. In order to match the inputs and outputs, it is necessary for the types of data expressed by variables to be the same. In addition, it is necessary for the units and ranges to be the same.

In order to allow the inputs and outputs of the software model and the external environment model to match each other, it is necessary to match the attributes of variables to be input or output, and verifiers need to check the attributes of variables to be input or output. On the other hand, if the range of extraction of codes is limited to be excessively narrow, the cause of the defects cannot be modeled. If software is verified while avoiding the state explosion by including the cause of the defects in the model, it is necessary to flexibly adjust the range of extracting the codes from the software. However, if the range of extraction is adjusted, the input and output variables are changed every time the range is adjusted, and the attribute of each variable needs to be checked again. Thus, enormous time and effort are required to check the attribute of each variable by searching for the variable that can be possibly connected to the external environment model for software the scale of which is increased and which is more complicated.

The present invention has been made in view of such a problem, and an object of the present invention is to reduce time and effort required to allow inputs and outputs of a software model and an external environment model to match each other when the external environment model such as hardware and the software model are produced and combined as a verification model of a system.

### Solution to Problem

In order to solve the above-described problem, the present invention provides a checking model generation program that that inputs a source code of software to be verified and analyzes the same to generate a model checking model, and the program is configured to include: a dependency relationship analysis unit that derives a dependency relationship between variables and the like of the source code for a computer; a variable attribute recording unit that records attribute information of some variables of the source code; a variable attribute interpreting unit that infers the attribute of each variable in the source code on the basis of the dependency relationship and the attribute information of the variable attribute recording unit; and a variable attribute information display unit that displays the attribute information.

Next, the program is configured to include an external environment model database and an external environment model candidate extraction unit that extracts available models from the external environment model database in accordance with the variable attribute information.

Next, the program is configured to include a dependency relationship limiting unit that accepts designation of limiting a range of the dependency relationship, a source code extraction unit that slices the source code on the basis of the limited dependency relationship, a model conversion unit that generates a checking software model on the basis of the extracted source code, an external environment model selection unit that selects a model for use among those extracted by the external environment model candidate extraction unit, and a system model combining unit that combines checking system models using the software model and the external environment model selected by the external environment model selection unit. Advantageous Effects of Invention

A checking model generation program traces the dependency relationship of each variable on the basis of the attribute information of some variables (variables of a register that inputs or outputs to/from a microcomputer, arguments of a function, or the like), and infers the attributes of the other variables, so that it is not necessary for the user of the program to check the attribute information of all variables by hamself/herself. In addition, time and effort required to allow inputs and outputs of the software model and the external environment model to match each other can be reduced.

Further, the checking model generation program extracts available external environment models from the database on the basis of the variable attribute information including the inferred attributes, so that the user of the program can reduce the steps of selecting the external environment model.

Further, when the user selects at least one variable, the checking model generation program searches the database for the external environment model that can be connected to the sliced software model on the basis of the attribute information of the variable having a dependency relationship with the selected variable, and presents the same as a candidate. On the contrary, when the external environment model is selected, the variable of the connectable software is searched for on the basis of the attribute of the input or output variable of the external environment model, and is set as a condition (slice standard) of slicing, so that the source code that is the source of conversion of the software model that can be connected to the selected external environment model is extracted. Accordingly, the user can reduce the steps of operations to model the both of hardware and software for verification.

### Brief Description of Drawings

Fig. 1 is a diagram for showing a configuration of the present invention.
Fig. 2 is a diagram for showing a functional configuration of the present invention.
Fig. 3 is a diagram for showing a processing flow of inferring the attribute information of a variable.
Fig. 4 is a diagram for showing a detailed processing flow of an attribute inference process.
Fig. 5 is a diagram for showing source codes as an example of an analyzing target.
Fig. 6 is a diagram for showing an example of a variable dependency relationship graph.
Fig. 7 is a diagram for showing a table stored in a variable attribute database.
Fig. 8 is a diagram for showing a table stored in an inference rule database.
Fig. 9 is a diagram for showing variable attribute information.
Fig. 10 is a diagram for showing variable attribute information.
Fig. 11 is a diagram for showing a functional configuration of the present invention.
Fig. 12 is a diagram for showing a processing flow of generating a system verification model.
Fig. 13 is a diagram for showing a candidate list of external environment models.
Fig. 14 is a diagram for showing a system checking model.

### Description of Embodiments

Hereinafter, an embodiment of the present invention will be described using the drawings.

### First Embodiment

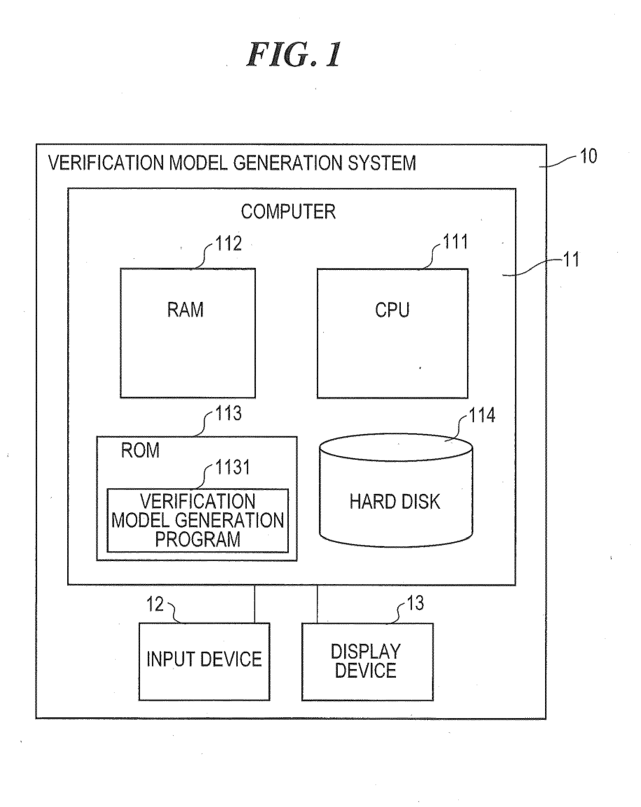

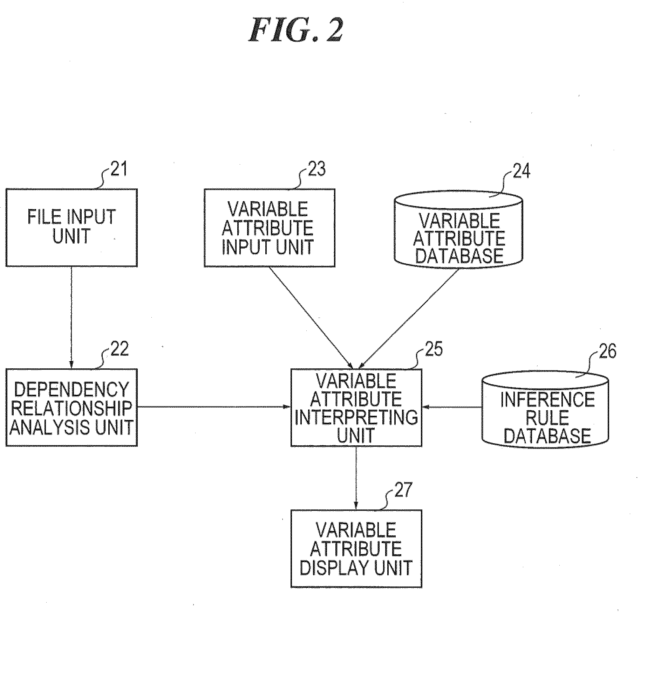

Fig. 1 shows a system configuration in the case where the present invention is realized as a system. The present invention is realized as, for example, a software tool. In a system 10, software that executes a process is stored in, for example, a ROM 113 on a computer 11 as a verification model generation program 1131, and is read by a CPU 111 to be executed while using a RAM 112 as a working storage area. Accordingly, the computer 11 executes a process defined by the verification model generation program 1131. The processing content thereof will be described using Fig. 2 and the other drawings. A source code file to be analyzed is stored in a storage device such as a hard disk 114 on the computer 11. A user operation such as an instruction of executing an analysis can be performed using an input device 12 such as a keyboard.

It should be noted that an output of the verification model generation program 1131 is displayed on a display device 13 such as a display. Alternatively, an output to an external computer (not shown) through a network, or an output written into an external storage medium such as a CD-ROM in a data file format may be used.

Fig. 2 shows a basic functional configuration of the verification model generation program 1131. A file input unit 21 has a function by which a user can select one or more source code files to be analyzed, and reads the source code file from a storage medium (the hard disk 114 or the like) of the computer in accordance with file designation by the user. When the user instructs to execute an analysis, a dependency relationship analysis unit 22 analyzes the source code file read by the file input unit 21, and derives the dependency relationship of a program generated from the source codes. In this case, the dependency relationship is a relationship possibly having an impact on an operation result depending on the execution order of programs. Specifically, the dependency relationship is a program dependency relationship that is a dependency relationship between statements, or a variable dependency relationship that is a dependency relationship between variables. Resolving the program dependency relationship on a variable basis results in the variable dependency relationship, and thus the program dependency relationship and the variable dependency relationship can be regarded to be equivalent to each other as information. The method of deriving the program dependency relationship and the variable dependency relationship is described in literatures, and thus will not be described in the specification.

A variable attribute input unit 23 accepts an input from the user in terms of an attribute related to a variable described in the source codes. Unless otherwise stated below, the attribute of a variable relates to matching between an input and an output of a software model. A variable attribute database 24 records therein attribute information for some variables of the source codes read by the file input unit 21. A variable attribute interpreting unit 25 infers the attribute of each variable described in the source codes as much as possible on the basis of the dependency relationship information derived by the dependency relationship analysis unit 22 and the variable attribute information held by one or both of the variable attribute input unit 23 and the variable attribute database 24. A rule recorded in an inference rule database 26 is used for the inference. A variable attribute display unit 27 displays the variable attribute information inferred by the variable attribute interpreting unit 25 on the display device 13 together with the variable attribute information held by the variable attribute input unit 23 and the variable attribute database 24.

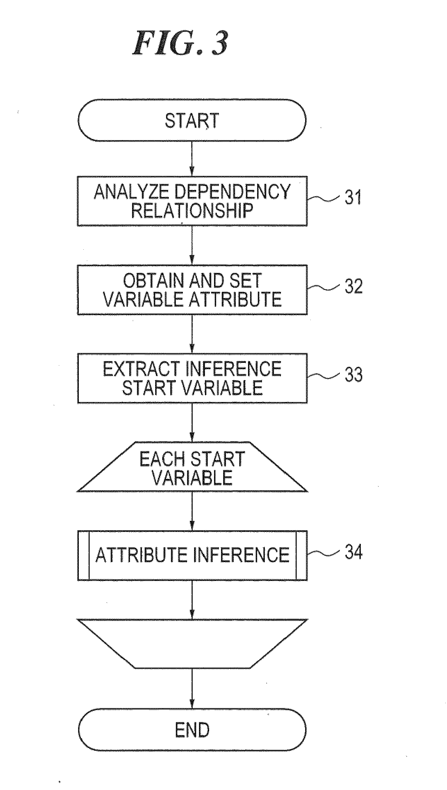

Fig. 3 shows a process performed by the verification model generation program 1131 using the functions shown in Fig. 2, and shows a processing flow of inferring the attribute information of a variable described in the input source codes.

When the process starts, the dependency relationship analysis unit 22 analyzes the dependency relationship of the input source codes to be output as data in Step 31. As an example, on the assumption that an equation of a=b in which a and b are variables is described in the source codes, the variable dependency relationship can be expressed as "a←b". This means that the variable b has an impact on the variable a. The variable dependency relationship may be inversely described as "a→b" as long as the rule of the expression is set. In the embodiment, the former is employed. Further, a and b are referred to as a dependency source and a dependency destination, respectively.

Next, the variable attribute interpreting unit 25 obtains the attribute information of each variable described in the input source codes from the variable attribute input unit 23 and the variable attribute database 24, and associates the attribute information with each variable in the dependency relationship data output from the dependency relationship analysis unit 22 in Step 32. It should be noted that Step 32 is executed only when there is no attribute information of the corresponding variable, and is skipped in other cases.

Next, the variable attribute interpreting unit 25 extracts a start variable for an attribute inference process in the dependency relationship data in Step 33. In the embodiment, the attribute information is inferred in the forward direction (from the variable of the dependency destination to that of the dependency source) on the basis of the attribute information of the variable input when the input source codes are executed as a program. Further, the process of the embodiment is a recursive process. Therefore, as the start variable, extracted is a variable having no impact on any other variables, namely, a variable on which no other variables are dependent (there is no variable as the dependency source). However, in the case where the dependency relationship is looped and no corresponding variable exists, one arbitrary variable is selected.

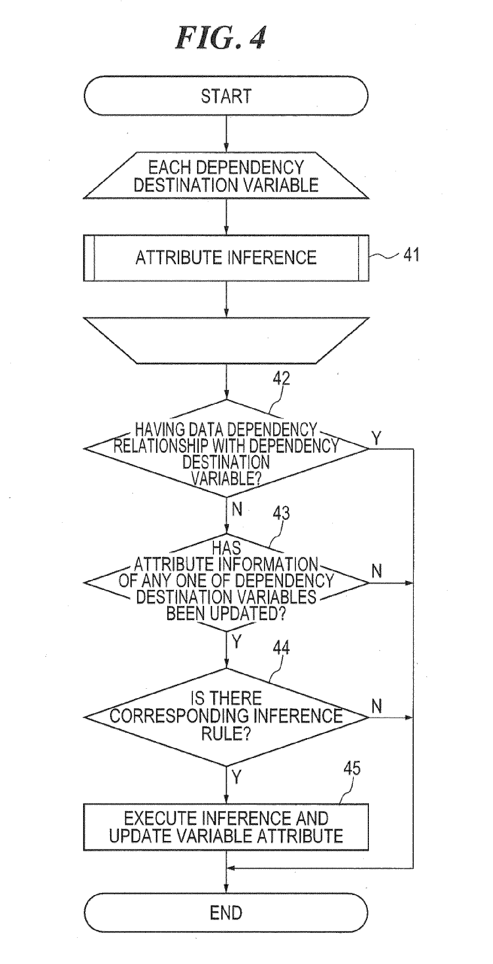

Next, the variable attribute interpreting unit 25 performs a process (the detail of which is described in Fig. 4) of inferring the attribute of each of the target start variables in Step 34. Step 34 is executed for each of the all start variables of the inference extracted in Step 33. Then, the process is completed.

It should be noted that the process of Fig. 3 is executed at the timing when the user instructs to execute, or when the user inputs the attribute information into the variable attribute input unit 23. When the process is completed, the variable attribute display unit 27 displays the output dependency relationship information on the display device 13.

Fig. 4 shows a process of inferring the attribute information of a variable, and shows a detailed flow of Step 34 ("attribute inference" process) in Fig. 3.

When the process starts, the attribute information is inferred for each of the all dependency source variables of the target variables in Step 41. In Step 41, the variable attribute interpreting unit 25 performs a process (process of Fig. 4) of inferring the attribute information of the target dependency source variable. Next, the variable attribute interpreting unit 25 determines in Step 42 whether or not the target variable and the dependency source variable are in the data dependency relationship. If the target variable and the dependency source variable are in the data dependency relationship, it is not necessary to update the attribute information of the target variable, and thus the process is completed. If not, the flow proceeds to Step 43. Next, the variable attribute interpreting unit 25 determines in Step 43 whether or not the attribute information of any one of the dependency source variables has been updated in Step 41. If at least one variable has been updated, the flow proceeds to Step 44. If no variable has been updated, the attribute information of the target variable is held, and the process is completed. Next, the variable attribute interpreting unit 25 determines in Step 44 whether or not the target variable corresponds to the inference rule recorded in the inference rule database 26. If the target variable corresponds to at least one rule, the flow proceeds to Step 45. If not, the attribute information of the target variable is held, and the process is completed. Next, the variable attribute interpreting unit 25 executes an inference process on the basis of the corresponding inference rule in Step 44, and the result is reflected on the attribute information of the target variable in Step 45. Then, the process is completed. It should be noted that the above process is a process in the case where the dependency relationship is not looped. In the case where the loop exists, it is necessary to exclude the variable that was once targeted for the "attribute inference" process.

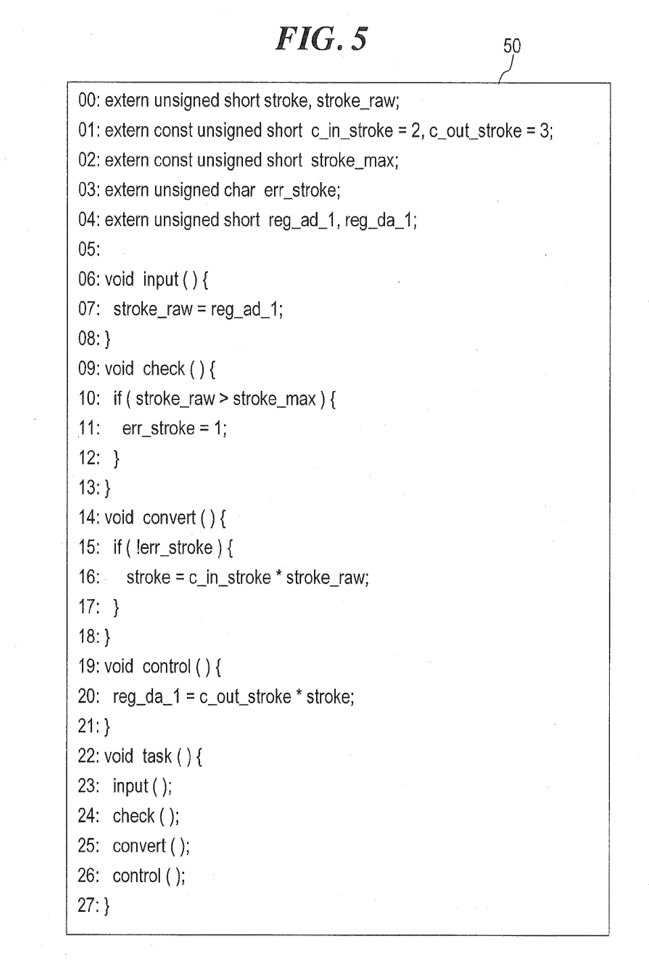

Hereinafter, processing examples of Fig. 3 and Fig. 4 will be shown. A source code 50 of Fig. 5 is an example of a source code written in C to be input to the verification model generation program 1131 for an analysis. The numbers on the extreme left denote line numbers.

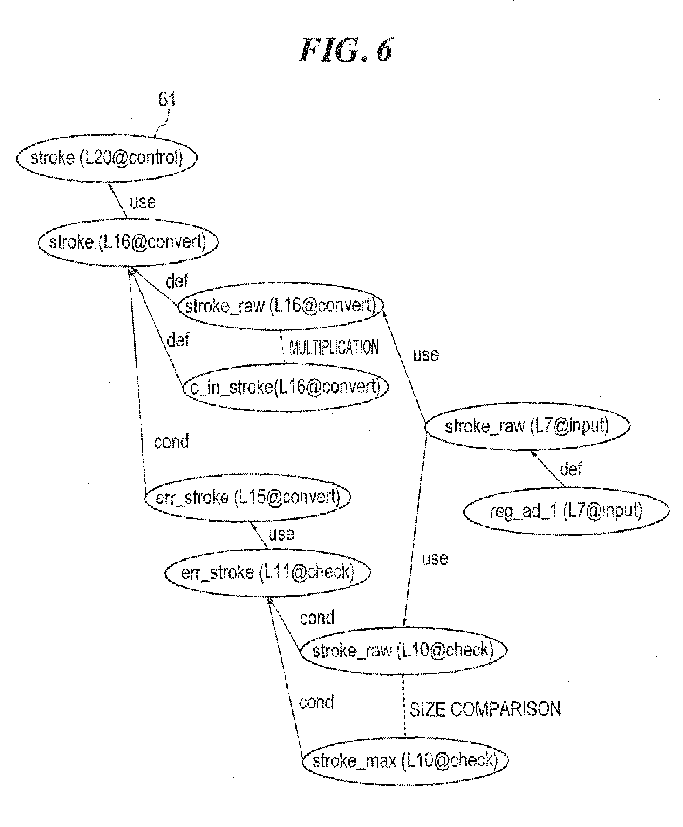

A variable dependency relationship graph 61 of Fig. 6 is a graph of variable dependency relationship data obtained in such a manner that the dependency relationship analysis unit 22 analyzes and outputs the source code 50 of Fig. 5. The variable dependency relationship graph 61 is displayed on, for example, the display device 13. The nodes of the variable dependency relationship graph 61 are variables distinguished using not only the names of variables and substances (storage areas), but also description positions (and execution paths). For example, the variable written as "stroke(L20@control)" indicates a variable "stroke" described in a function "control" on the 20th line of the source file. The variables may be distinguished from each other using not only the described line numbers, but also the column numbers and the names of source files. Further, although not described in the graph of Fig. 6, each node is associated with an attribute identified on the basis of only a source code such as the type of variable, an attribute provided from the variable attribute input unit 23 or the variable attribute database 24, and an attribute inferred by the variable attribute interpreting unit 25. The attributes are stored in the RAM 112 or the hard disk 114 as data.

Further, pieces of data representing the types of relationships are stored while being associated with edges (arrows) representing dependency relationships and edges (dashed lines) representing relationships in operational expressions in Fig. 6. Of the edges of the dependency relationships, "def" means that the variable of the dependency destination defines (sets a value by assignment) the variable of the dependency source. "use" means the data dependency relationship (the variable of the dependency source uses the value of the variable of the dependency destination). "cond" means the control dependency relationship (the value of the variable of the dependency source is influenced because the execution path is changed depending on the value of the variable of the dependency destination).

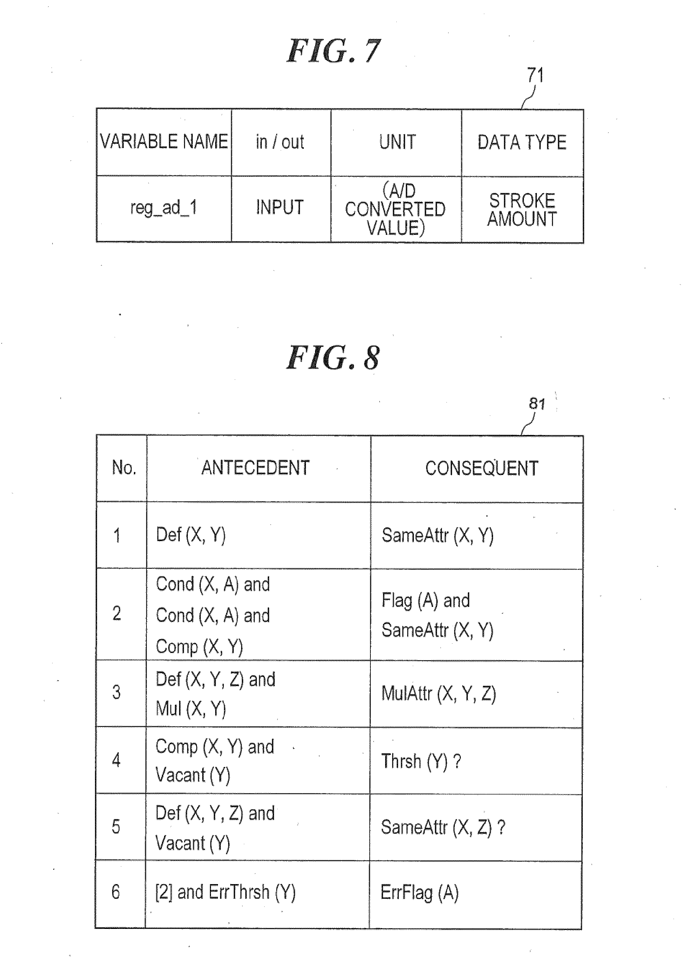

A variable attribute table 71 of Fig. 7 shows an example of the variable attribute recorded in the variable attribute database 24. The items of the variable attribute table 71 include a variable name, in/out (whether the variable is an input or an output into/from a program), a unit, and a data type. These values are preliminarily set. It can be understood that a variable "reg_ad_1" is a variable to be input and the data type is a stroke amount (of, for example, a brake pedal of a car). Further, the unit is "(A/D converted value) " which is a value obtained by A/D (Analog/Digital) conversion, and is not particularly set.

An inference rule table 81 of Fig. 8 shows an example of the inference rules recorded in the inference rule database 26. The items of the inference rule table 81 include an antecedent and a consequent. The table means that when the condition of the antecedent is satisfied, the condition of the consequent is also satisfied. The antecedent and the consequent are expressed using a predicate logic. These values are preliminarily set.

X and Y represent variables in the inference rule No. 1 of the inference rule table 81. The inference rule No. 1 means that if Def (X, Y) "X defines Y", SameAttr (X, Y) "Y has the same attribute information as X".

X, Y, and A represent variables in the inference rule No. 2 of the inference rule table 81. The inference rule No. 2 means that if Cond (X, A) "A and X are in the control dependency relationship (A is a dependency source)", if Cond (Y, A) "A and Y are in the control dependency relationship", and if Comp (X, Y) "X and Y are in the relationship of size comparison in an operational expression (connected by a size comparison symbol) ", Flag (A) "A is a determination flag (of abnormality or the like) and has not unit" and SameAttr (X, Y). It should be noted that the data type determined by the flag A is assumed as, for example, the data type of variable X.

X, Y, and Z represent variables in the inference rule No. 3 of the inference rule table 81. The inference rule No. 3 means that if Def (X, Y, Z) "X and Y define Z" and if Mul (X, Y) "X and Y are in the relationship of multiplication in an operational expression (connected by a multiplication symbol)", MulAttr (X, Y, Z) "the data type of Z is the same as X (or Y), and the unit of Z is a unit obtained by multiplying the unit of X by that of Y". The similar inference rules can be written for addition, subtraction, and division.

X and Y represent variables in the inference rule No. 4 of the inference rule table 81. The inference rule No. 4 means that if Comp (X, Y) and if Vacant (Y) "there is no attribute of Y", Thrsh (Y) "the data type of Y is a "threshold value". However, "?" attached to Thrsh (Y) means uncertainty. It should be noted that the data type of the threshold value Y is assumed as the data type of the variable X.

X, Y, and Z represent variables in the inference rule No. 5 of the inference rule table 81. The inference rule No. 5 means that if Def (X, Y, Z) and if Vacant (Y), SameAttr (X, Z). However, "?" attached to SameAttr (X, Z) means uncertainty.

Y and A represent variables in the inference rule No. 6 of the inference rule table 81. The inference rule No. 6 means that if the antecedent of the inference rule No. 2 is satisfied and if ErrThrsh (Y) "Y is an abnormal threshold value", ErrFlag (A) "A is an abnormality determination flag (flag indicating abnormality)". Since the inference rule No. 2 is used in the antecedent, No. 6 is given priority. Namely, the use of ErrFlag (A) is given priority over Flag (A).

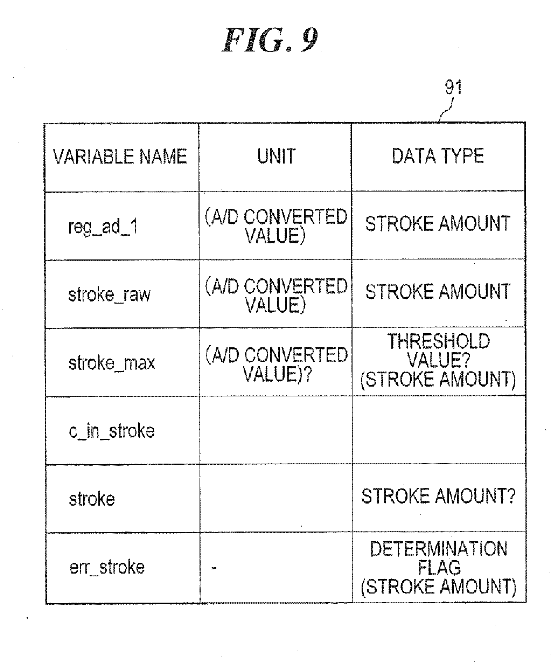

Fig. 9 shows a variable attribute table 91 associated with the nodes of the variable dependency relationship graph 61, and the table contains values obtained after the process of Fig. 3 was executed once. The items of the variable attribute table 91 include a variable name, a unit, and a data type.

In the variable attribute table, the variables are distinguished using not description positions but substances. Therefore, the nodes of the variable dependency relationship graph 61 and the lines of the variable attribute table 91 are in a relation of n:1. For example, there are two nodes associated with the variable "stroke" in the variable dependency relationship graph 61. However, there is only one line associated therewith in the variable attribute table 91.

Hereinafter, a procedure of generating the variable attribute table 91 by the variable attribute interpreting unit 25 using the inference process will be described. The variable attribute interpreting unit 25 receives data of the variable dependency relationship graph 61 from the dependency relationship analysis unit 22, and the data structure of the variable attribute table 91 is generated on the basis of the variables contained in the variable dependency relationship graph 61. At this time, only the variable names are input in the variable attribute table 91, and the other pieces of data are empty. A flag (not written in the variable attribute table 91) for indicating an update of the attribute information of each variable is cleared.

Next, the variable attribute interpreting unit 25 obtains the attribute information of the variables contained in the variable dependency relationship graph 61 from the variable attribute table 71 of the variable attribute database 24. However, only the attribute information of each variable to be input is obtained in the embodiment. Accordingly, the attribute information related to the variable "reg_ad_1" is obtained, and thus a value is input in the variable attribute table 91. In this case, the flag for indicating an update of the attribute information of the variable "reg_ad_1" is set.

Next, the variable attribute interpreting unit 25 extracts the inference start variable of the variable dependency relationship graph 61. It is determined whether or not there are dependency source variables in the all nodes. If only the node that is determined as having no dependency source variable is left, the variable "stroke(L20@control)" is extracted. The variable attribute interpreting unit 25 performs the "attribute inference" process of Fig. 4 for the variable.

When the "attribute inference" process is executed for the variable "stroke(L20@control)", the "attribute inference" process is executed for the all nodes of the variable dependency relationship graph 61 because the "attribute inference" process is a recursive process. The variable "reg_ad_1(L7@input)" has no dependency destination variable, and thus the attribute information is held. The attribute information is the same as the value obtained from the variable attribute table 71.

Next, the processes of Steps 42 to 45 are executed for the variable "stroke_raw(L7@input)". The attribute information of the dependency destination variable "reg_ad_1(L7@input)" has been updated because a value was obtained from the variable attribute table 71, and thus the inference rule table 81 is searched for the matched inference rule. The inference rule No. 1 is extracted as the matched inference rule (X of the inference rule is "reg_ad_1", and Y is "stroke_raw"), and the attribute of "stroke_raw" is updated to the same content as "reg_ad_1".

As similar to the above, the attribute information of each of the other variables is updated. The variable "stroke_raw(L16@convert)" and the variable "stroke_raw (L10@check)" are in the data dependency relationship with the variable "stroke_raw(L7@input)", and thus the attribute information is not updated (already updated).

The variable "stroke_max (L10@check) " matches the inference rule No. 4 of the inference rule table 81. Thus, the data type and the unit are determined as "threshold value of stroke amount" and " (A/D converted value)", respectively. However, "?" is attached to each of the attribute values because of uncertainty.

The variable "err_stroke (L11@check)" matches the inference rule No. 2 of the inference rule table 81 (X of the inference rule is "stroke_raw", Y is "stroke_max', and A is "err_stroke"). On the basis of Flag (A) of the consequent, in terms of the attribute information of "err_stroke", the data type is the determination flag for the stroke amount, and the.unit is updated to no unit because of the determination flag. Further, on the basis of SameAttr (X, Y), the attribute of "stroke_max" is updated to the same content as "stroke_raw".

The variable "err_stroke (L15@convert) " is in the data dependency relationship with "err_stroke(L11@check)", and thus the attribute information is not updated.

The variable "stroke(L16@convert)" matches the inference rule No. 3 of the inference rule table 81 (X of the inference rule is "stroke_raw", Y is "c_in_stroke", and Z is "stroke"). However, the attribute information of "c_in_stroke" is empty and unknown, and thus it is impossible to continue to infer. On the other hand, the variable "stroke(L16@convert)" matches the inference rule No. 5, and thus the data type of "stroke" is determined as "stroke amount". However, "?" is attached to the attribute value because of uncertainty.

Then, the process of Fig. 3 is completed. Similarly to the above, the inference process may be performed in the backward direction on the basis of the attribute information of a variable to be output.

As described above, on the basis of the attribute information of a variable, the attribute information of another variable can be automatically inferred. In addition, the attribute information of each variable can be obtained in a shorter time than a case where the user manually tracks the dependency relationship of each variable to interpret the attribute information.

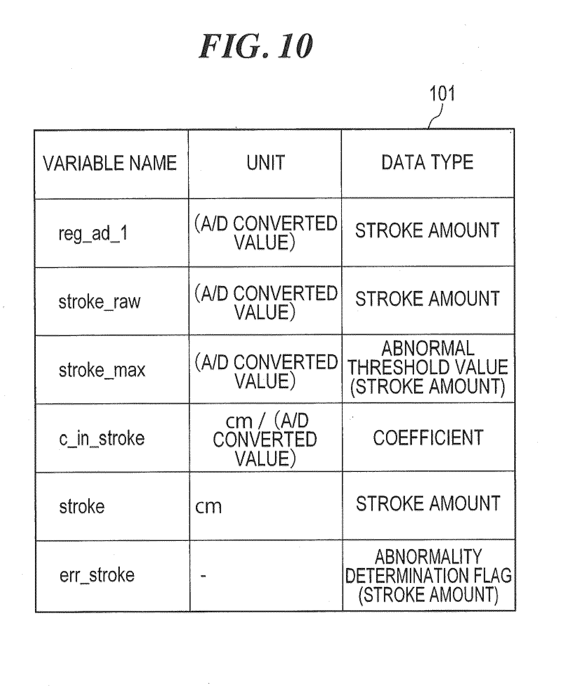

Fig. 10 shows a variable attribute table 101 obtained by updating the variable attribute table 91 while executing the inference process of Fig. 3 again in response to an input of the variable attribute information from the user.

After the values of the variable attribute table 91 are derived in the inference process, the user inputs the data type of the variable "stroke_max" as "abnormal threshold value" and the unit as "(A/D converted value)" into the variable attribute input unit 23. As these attribute values, possible values are prepared for the data type and the unit, and a list of the values is displayed as candidates. The user visually confirms the list on the display device 13, and selects and sets some values using the input device 12. In the verification model generation program 1131, "threshold value", "abnormal threshold value", and the like are preliminarily defined as the candidates for the data types. Further, "abnormal threshold value" is defined as the subordinate concept of "threshold value". Thus, when the data type of the variable "stroke_max" is "threshold value", "threshold value" can be selected on the list as the current value, and "abnormal threshold value" that is the subordinate concept is sequentially displayed on the list as the next candidate.

When the user sets the input of the attribute information, the verification model generation program 1131 executes the inference process of Fig. 3. Accordingly, the attribute information of the variable "err_stroke" is updated in accordance with the inference rule No. 6, and the data type is "abnormality determination flag of stroke amount".

Further, when the user inputs and sets the data type as "coefficient" and the unit as "cm/(A/D converted value)", as the attribute information of the variable "c_in_stroke", the verification model generation program 1131 executes the inference process of Fig. 3, and the attribute information of the variable "stroke" is updated in accordance with the inference rule No. 3. In addition, the data type is "stroke amount", and the unit is "cm". As the data for representing a unit, elements are prepared for each of the numerator and the denominator, and overlapped elements between the numerator and the denominator may be eliminated. It should be noted that the operation rules of systems of units are defined in the verification model generation program 1131 similarly to the inference rule table 81.

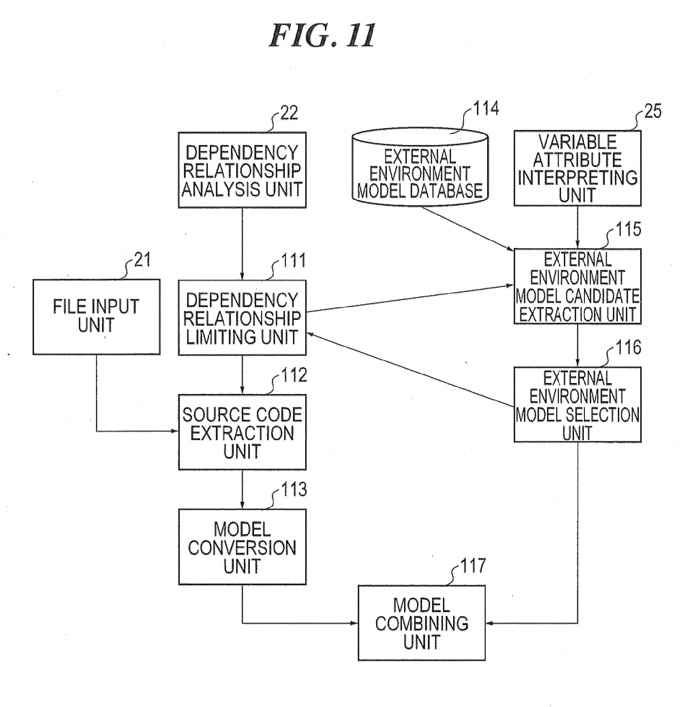

As described above, the user additionally inputs the attribute information of each variable, so that the number of variables whose attribute information can be inferred can be increased, and the ratio relative to all variables can be improved. Thus, the attribute information of each variable can be obtained in a shorter time than a case where the user manually interprets the attribute information of each variable. Fig. 11 shows a functional configuration of the verification model generation program 1131, and these functions are operated together with the basic functional configuration of Fig. 2.

A dependency relationship limiting unit 111 receives the dependency relationship information related to the source code to be analyzed from the dependency relationship analysis unit 22, and individually manages the respective variables contained in the dependency relationship information while being associated with data (leaving setting data) indicating whether or not each variable is left at the time of extracting the source code. The leaving setting data is represented as binary data (True; leave and False; not leave), and means to limit a range used when the source code is extracted in the dependency relationship information. As the initial value of the leaving setting data, for example, the all variables are set to True. Further, the dependency relationship analysis unit 22 changes the leaving setting data in response to an input by the user or designation from an external environment model selection unit 116.

When a variable set as to be left at the time of extracting the source code and another variable set as not to be left are in a dependency relationship in the dependency relationship information, the variable to be left serves as a boundary between a software model and an external environment model. Hereinafter, such a variable is referred to as a boundary variable. For example, when "stroke_raw(L7@input)" is set as to be left and "reg_ad_1 (L7@input)" is set as not to be left in the variable dependency relationship graph 61, "stroke_raw(L7@input)" is the boundary variable.

For the leaving setting data of the dependency relationship analysis unit 22, the leaving setting of each variable or a variable designated as a boundary may be input by the user or designated from the external environment model selection unit 116. For example, when "stroke_raw(L7@input)" is designated as the boundary variable on the input side, the leaving setting of "stroke_raw(L7@input)" is True, and the leaving setting of "reg ad 1(L7@input)" is False.

A source code extraction unit 112 receives the source code to be analyzed from the file input unit 21, and extracts (slices) the source code on the basis of the dependency relationship information and the leaving setting data of the dependency relationship limiting unit 111. The extracted source code is output to a file. As a slicing method, for example, after the syntax of the source code is analyzed, a statement in which a variable whose leaving setting is True is written among those contained in the dependency relationship information, syntax (function or the like) including the statement, and relevant syntax (variable declaration or the like) are left, the other codes are removed.

A model conversion unit 113 converts the sliced source code to be output by the source code extraction unit 112 into a model description language that can be handled by a model checking device. For example, a model checking device called SPIN (Simple Promela INterpriter) uses Promela as a model description language. As a method of model conversion, after the syntax of the source code is analyzed, each piece of syntax is converted on the basis of a rule of converting from the syntax of the source code into the syntax of the model description language. This conversion rule is preliminarily prepared. A model obtained by the conversion is a verification model related to software to be checked, and is a part for a verification model related to a system to be checked.

Model parts that are preliminarily coded in terms of the external environment of software to be verified or template model parts for automatic code generation are stored in an external environment model database 114 while being associated with attributes. An external environment model candidate extraction unit 115 receives the dependency relationship information associated with the leaving setting data and the attribute information of each variable of software to be verified from the dependency relationship limiting unit 111 and the variable attribute interpreting unit 25, respectively, and extracts the external environment model whose interface matches from the external environment model database 114 using a part (the data item, the unit, or the like) of the attribute information of the variable whose leaving setting is True as a search key. The extracted external environment model is a model possibly serving as the external environment of software to be verified.

An external environment model selection unit 116 displays a list of attributes (names and the like) of the external environment model extracted by the external environment model candidate extraction unit 115 to the user using the display device 13, and accepts designation regarding whether or not each external environment model is to be used by the user from the input device 12. "Non-use" is set by default. If the user designates one of the external environment models as "use", the attribute information of the variable serving as an interface of the selected external environment model is passed on to the dependency relationship limiting unit 111. Then, the dependency relationship limiting unit 111 searches the dependency relationship information for the variable whose attribute matches that of the interface variable of the external environment model among those of software to be verified, and changes the leaving setting as the boundary variable. Specifically, the boundary variable is set as to be left. When the interface variables are input, the variables set as not to be left among those in the dependency source direction (nearer the output) from the boundary variable are changed to those set as to be left (for example, until the variable whose leaving setting is True appears). Further, the variables in the dependency destination direction (nearer the input) from the boundary variable are set as not to be left. When the interface variables are output, the leaving setting is changed in a way opposite to the case of the input. It should be noted that the external environment model selection unit 116 may output the external environment model designated as "use" to a file.

A model combining unit 117 combines the verification model of the system to be verified on the basis of the software model output from the model conversion unit 113 and the external environment model designated as "use" by the external environment model selection unit 116. In this case, when there is unmatched attribute information between the interface variable of the external environment model and the boundary variable of the corresponding software, the attribute information of the interface variable of the external environment model is changed. For example, the name of the interface variable is changed to the same name as the boundary variable. The combined verification model is output to the hard disk 14 as a file.

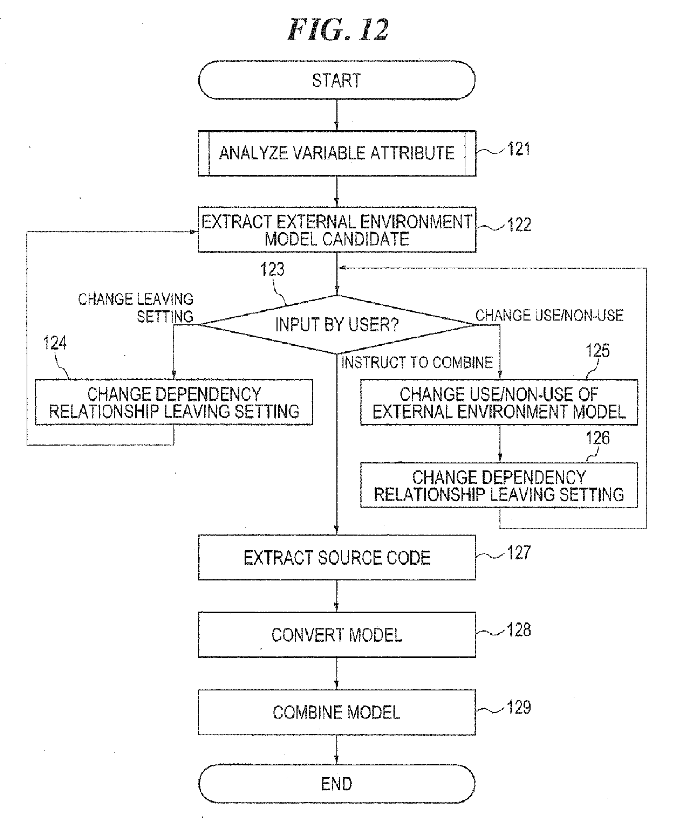

Fig. 12 shows a process performed by the verification model generation program 1131 using the functions shown in Fig. 2 and Fig. 11, and shows a processing flow of generating the verification model of the system.

When the process starts, the verification model generation program 1131 performs the process of Fig. 3 in Step 121, and generates the dependency relationship information of the software to be verified. The dependency relationship information is passed on to the dependency relationship limiting unit 111 from the dependency relationship analysis unit 22 to be managed.

In Step 122, the external environment model candidate extraction unit 115 extracts a candidate of the external environment model from the external environment model database 114 on the basis of the dependency relationship information output in Step 121.

In Step 123, the verification model generation program 1131 verifies an input by the user from the input device 12. If the input by the user is to change the leaving setting of a variable, the flow proceeds to Step 124. If the input by the user is to change the use/non-use setting of an external environment model extracted by the external environment model candidate extraction unit 115, the flow proceeds to Step 125. If the input by the user is to instruct to combine the verification model of the system, the flow proceeds to Step 127.

In Step 124 , the dependency relationship limiting unit 111 changes the leaving setting of each variable in the dependency relationship information in accordance with the input by the user, and the flow returns to Step 122. In Step 122, a candidate of the external environment model is extracted again in accordance with the change of the leaving setting of each variable.

In Step 125, the external environment model selection unit 116 changes the use/non-use setting of each external environment model in accordance with the input by the user, and the flow proceeds to Step 126. In Step 126, the dependency relationship limiting unit 111 searches for the corresponding boundary variable in the software to be verified on the basis of the attribute of the interface variable of the external environment model set as "use" in Step 125, and changes the leaving setting of each variable in the dependency relationship information. If the change is completed, the flow returns to Step 123.

In Step 127, the source code extraction unit 112 extracts a source code using the dependency relationship information with the leaving setting of the variable granted. In Step 128, the model conversion unit 113 converts the source code extracted in Step 127 into the verification model of the software. In Step 129, the model combining unit 117 combines and outputs the verification model of the system on the basis of the verification model of the software output in Step 128 and the external environment model set as "use" in Step 125. Then, the process is completed.

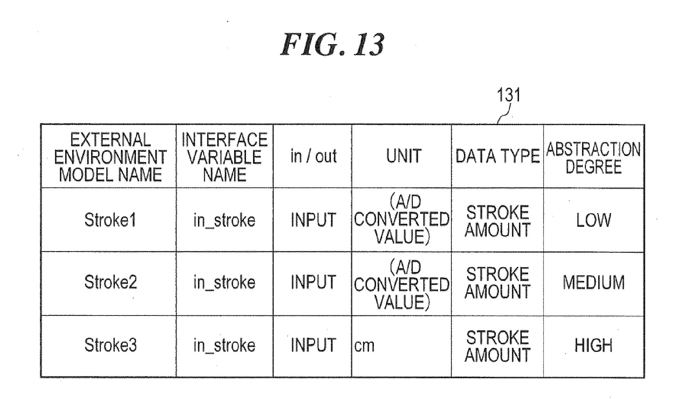

An external environment model attribute table 131 of Fig. 13 is an example of attribute information related to the external environment models recorded in the external environment model database 114, and the table is also recorded in the external environment model database 114. One line of the variable attribute table 131 is associated with one external environment model, and the items include an external environment model name, an interface variable name, in/out (whether the interface variable is an input or an output), a unit (of the interface variable), a data type (of the interface variable), and an abstraction degree (of the external environment model). These values are preliminarily set.

Three external environment models of Stroke1, Stroke2, and Stroke3 are registered in the external environment model attribute table 131. The data type of the interface variable is "stroke amount" and input/output is "input" in each model. On the other hand, the unit of the interface variable of each of Stroke1 and Stroke2 is "(A/D converted value)", and that of Stroke3 is "cm".

The external environment model candidate extraction unit 115 receives the variable attribute table 101 of Fig. 10 from the variable attribute interpreting unit 25, and extracts the external environment model whose data type and unit match those in the external environment model attribute table 131. Accordingly, Stroke1 and stroke2 are extracted for the variables "reg_ad_1" and "stroke_raw", and Stroke3 is extracted for the variable "stroke". The extracted models are passed on to the external environment model selection unit 116 together with the attribute information.

Further, the dependency relationship limiting unit 111 receives from the external environment model selection unit 116 the attribute information related to the interface variable of the external environment model set as "use" by the user among Stroke1 to Stroke3, and changes the leaving setting of each variable in the dependency relationship information. For example, when the user sets Stroke3 as "use", the data type "stroke amount" and the unit "cm" of the interface variable are passed on to the dependency relationship limiting unit 111, and the dependency relationship limiting unit 111 handles the corresponding variable "stroke" as the boundary variable.

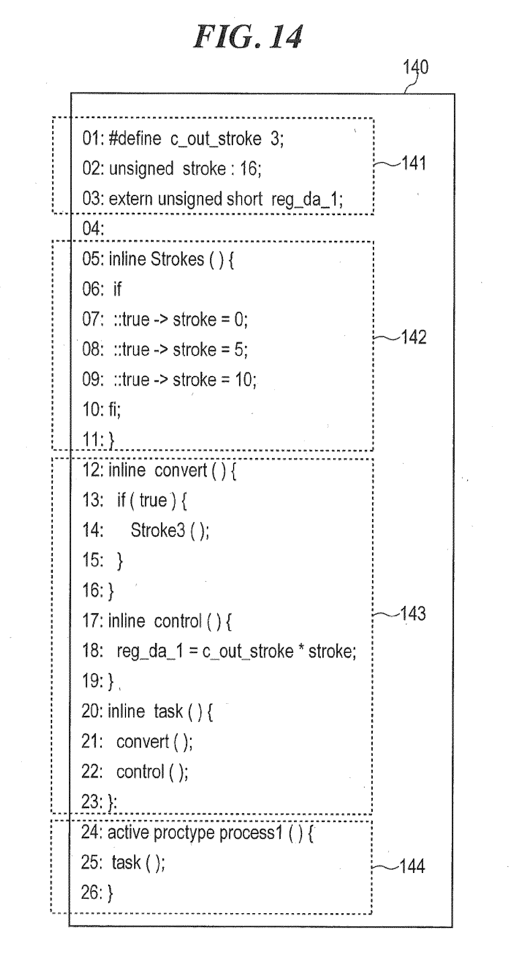

A verification model 140 of Fig. 14 is an example of the verification model output by the model combining unit 117 for the system to be verified. It should be noted that as a premise of outputting the verification model 140, the external environment model selection unit 116 sets Stroke3 of the external environment model as "use" with the input by the user, and the dependency relationship limiting unit 111 sets the leaving setting of the variable "err_stroke" as False with the input by the user. Further, as a conversion rule used by the model combining unit 117, a C language function is replaced by an in-line macro of Promela, and a process of executing an in-line macro corresponding to a function that is not called by any function in a function call graph is added.

The verification model 140 includes four sections. A verification model part 141 is formed in such a manner that declarations of variables and fixed values used in the software model and the external environment model are integrated by the model combining unit 117. A verification model part 142 is formed in such a manner that the interface variable name of the code of the external environment model "Stroke3" recorded in the external environment model database 114 is changed into the name of the boundary variable "stroke". A verification model part 143 is formed in such a manner that syntax that assigns a value into the boundary variable "stroke" (14th line) is replaced by the calling of the in-line macro of the external environment model "Stroke3" by the model combining unit 117 for the verification model of the software converted and output by the model conversion unit 113. The replacement into the in-line macro is preliminarily determined as a conversion rule. A verification model part 144 is a process added by the model combining unit 117.

The verification model of the system is combined by the program as described above, so that the user can reduce the steps of selecting the external environment model and time and effort required when inputs and outputs of the software model and the external environment model are allowed to match each other. Further, the user can reduce the steps required in the operation of modeling both of the software and the external environment.

### List of Reference Signs

- 11: computer
- 111: CPU
- 112: RAM
- 113: ROM
- 1131: verification model generation program
- 12: input device
- 13: display device
- 114: hard disk
- 21: file input unit
- 22: dependency relationship analysis unit
- 23: variable attribute input unit
- 24: variable attribute database
- 25: variable attribute interpreting unit
- 26: inference rule database
- 27: variable attribute display unit

## Claims

1. A software verification program that allows a computer to input a source code of software to verify the software, the program comprising:
a dependency relationship analysis unit that derives a dependency relationship between commands or variables for the source code;
a variable attribute recording unit that records attribute information of some variables of the source code;
a variable attribute interpreting unit that infers the attribute information of each variable in the source code on the basis of the dependency relationship and the variable attribute information in accordance with a predetermined inference rule; and
a variable attribute information display unit that displays the attribute information.

2. The software verification program according to claim 1, wherein a variable attribute input unit that accepts an input of the variable attribute information by a user is provided, and
the variable attribute interpreting unit uses the variable attribute information input to the variable attribute unit in the inference of the attribute information of each variable of the source code.

3. The software verification program according to claim 1, wherein an external environment model database in which an external environment model is recorded together with the attribute information, and an external environment model extraction unit that extracts a model possibly serving as an external environment of a software model obtained by converting the source code from the external environment model database are provided, and
the external environment model extraction unit searches the variable attribute information contained in the dependency relationship for the external environment model whose attribute of the interface matches to be output as a candidate of the external environment model that can be connected to the software model.

4. The software verification program according to claim 3, wherein a dependency relationship limiting unit that accepts from the user a change of a leaving setting of commands or variables used to extract the source code for the dependency relationship is provided,
and
the external environment model extraction unit narrows down the candidate of the external environment model extracted from the external environment model database using only a variable whose leaving setting is set as to be left as one whose attribute matches the interface on the basis of the dependency relationship whose leaving setting is changed by the dependency relationship limiting unit.

5. The software verification program according to claim 3, wherein a dependency relationship limiting unit that changes a leaving setting of commands or variables used to extract the source code for the dependency relationship is provided, and
the external environment model extraction unit accepts a selection made by the user for the external environment model extracted from the external environment model database; when the user selects the external environment model, the dependency relationship limiting unit searches the dependency relationship for a variable whose interface matches from the attribute information of the selected external environment model; and the leaving setting of the dependency relationship is changed as a boundary variable between the software model obtained by converting the source code and the external environment model.

6. The software verification program according to any one of claims 3 to 5,
wherein a source code extraction unit that extracts a part of the source code from the dependency relationship, a model conversion unit that converts the source code extracted by the source code extraction unit to be a software model, and a model combining unit that combines the software model converted by the model conversion unit with the external environment model extracted by the external environment model extraction unit to output a verification model for a system including the software are provided, and
the model combining unit modifies the both interfaces of the software model and the external environment model to be matched.

7. The software verification program according to claim 1, wherein the variable attribute interpreting unit selects a variable on which no other variables are dependent in the dependency relationship as a start variable, and infers the attribute information from a dependency destination variable to a dependency source variable.

8. The software verification program according to claim 1, wherein when there is a loop in the dependency relationship, the variable attribute interpreting unit does not infer the variable belonging to the loop for which the attribute information is once inferred.

9. A software verification system comprising an input device that accepts an input from a user, a display device that displays an output for the user, and a computer that executes the software verification program according to claim 1.
